# EUROPEAN PATENT APPLICATION

(11) **EP 2 173 063 A1**
(43) Date of publication of application: **07.04.2010**
(21) Application number: 08105474.4
(22) Date of filing: 01.10.2008
(51) Int. Cl.: H04L 12/26

(54) **Method, communication system, sender and computer program product for transmitting data from a sender to a receiver in a communication system**

(71) Applicant: Nokia Siemens Networks OY, 02610 Espoo (FI)
(72) Inventor: Armbruster, Friedrich, 81379, München (DE); Gernegross, Dietmar, 82041, Oberhaching (DE)

(57) **Abstract**

Method, communication system, sender and computer program product for transmitting data from a sender to a receiver in a communication system

A method, a communication system, a sender and a computer program product for transmitting data from a sender to a receiver in a communication system are provided, wherein a delay time of the data is determined. The delay time is indicated to the sender and/or to the receiver.

## Description

The invention relates to a method, a communication system and a computer program product for transmitting data from a sender to a receiver in a communication system.

In modern communication systems or networks the transmission of voice data is more and more changing. Whereas voice data was exchanged between a sender and a receiver via direct connections in the past it is nowadays mainly transmitted via so called TDM (time division multiplex) connections. Still, in both cases almost no delay occurs during a communication. That means two users communicating with each other over such connections receive each other's statements almost in real time. Thus, for the users such communications have a feeling like a "real" communication from face to face.

However, newer communication networks tend to transmit data and, therefore, voice via packet based connections. The method of transmitting voice data via packet switched networks is also called "Voice over IP", for example. In this case, IP stands for "Internet Protocol".

One disadvantage of packet based networks is that the data packets need a certain time to "travel" through the network. This can result in a delay between the sending of the packet at the sender and the receipt of said packet in the designated receiver.

Often, the delay resulting from the time a data packet would need for travelling from a sender to a receiver and back to the sender again ("round trip") is referred to as "round trip time".

One cause for such delays in a network can be the time that is needed to packetize the data to be transmitted, as an example. As the data to be transmitted has to be processed and sometimes digitized with the help of certain codecs in the sender (and decoded again in the receiver) more delay time is caused in this case.

Also, the processing and routing or forwarding of the specific data packets in the network and, especially, in the network nodes inside the network result in additional delay.

It is to be noted that these delays occur in actually all of the modern communication networks (or different parts of the network) involving packet based connection methods. But, as voice communications are mostly communications between end users, especially access networks such as wireline access systems (like xDSL) or wireless access systems (like Wi-Fi, GPRS, UMTS or the like) with their limited bandwidth are responsible for most of the delay time.

Generally speaking, it is known that packet based networks (especially IP networks) need a certain time to transport data packets from one user to another. Whereas in most areas these minor delays do not affect the data communication heavily, they are especially disadvantageous for applications like the transmission of voice. In this case, two users communicating with each other will experience a delay within their voice communication which will result in a disturbed communication. According to the dissertation ETH No. 15101, Braun, Zurich 2003, people expect an answer normally within 100-500 ms, a time that will often be exceeded by the round trip time. So, typically, when an answer to a question will not arrive immediately after the respective question is asked, this will lead the questioner to repeat the question or continue the communication without waiting for the answer, which, in turn, will result in both communication partners talking at the same time, for example. Thus, such communications will provide an uncomfortable feeling for the users involved.

Despite the fact that in the above the example of voice communication was particularly presented, it is clear that any communication (video, data, etc.) can be affected by the disadvantages of delay times.

While there are a lot of activities going on and while there are already some solutions available that try to reduce the delay that appears in such communications, it is clear that the delay can not be avoided completely. Therefore, other ideas have to be presented that make data communications more comfortable and, therefore, easier and more cost effective.

It is an object of the invention to present a solution to overcome the above explained problems.

This problem is solved according to the features of the independent claims. Further embodiments result from the depending claims.

According to the invention a method for transmitting data from a sender to a receiver in communication system is provided, wherein a delay time of the data is determined. One feature of the invention is that the delay time is indicated in the communication system, preferably to the sender and/or the receiver. Advantageously, the communication partners (sender and receiver) are then aware of the fact that a delay will occur in their communication.

In an embodiment of the invention it is determined whether the data to be transmitted is relevant and the delay time is indicated to the sender and/or the receiver depending on the determination of the relevance. For example, the delay time can be indicated when no relevant data is transmitted. In this case it is determined when a sender has stopped talking, for example, and the system can thus start indicating the delay time whenever the sender stops transmitting useful or relevant information.

In another embodiment, the delay time represents a round trip time for the data. In this case the delay time is the time the data actually needs to travel through the communication network.

In another embodiment, the data is at least partially voice data. The invention can therefore be used in applications that transmit voice, for example in VoIP applications (VoIP: Voice over Internet Protocol) or conventional TDM systems as well as in a combination of different communication methods.

In yet another embodiment, the indication of the delay time can be an acoustic and/or an optical and/or a tactile indication. Advantageously, the attention of the users of the communication system can be drawn to the presence of a delay time during their communication by means of different noticeable ways.

Further embodiments can be derived from the depending claims. The problem stated above is additionally solved by a communication system, a sender and a computer program product for transmitting data.

Embodiments of the invention are shown and illustrated in the following figure:

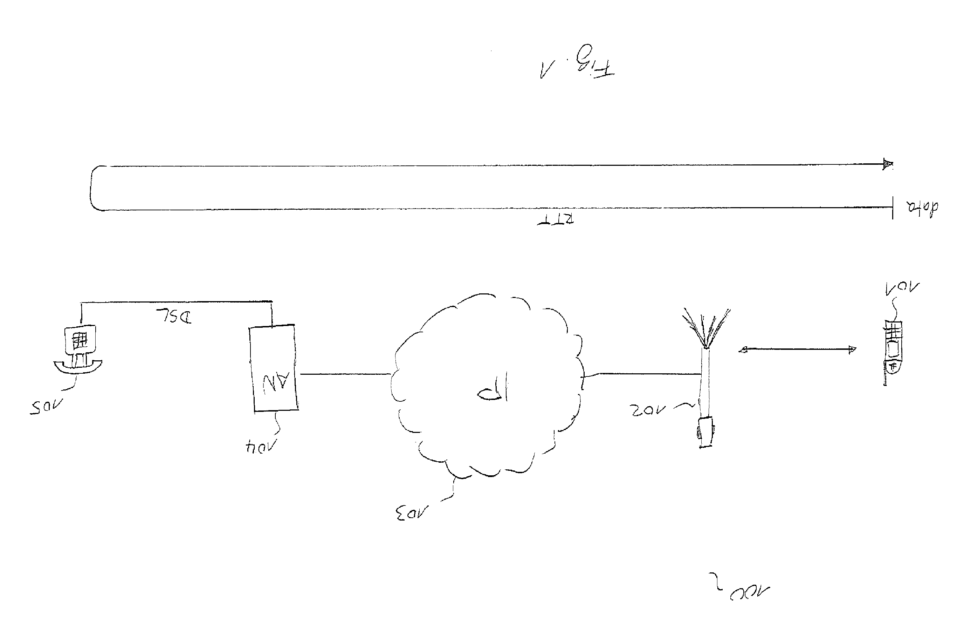

- Fig.1: shows a schematic configuration of a communication network.

The invention will now be described in more detail with the help of Fig. 1. Fig. 1 shows a schematic configuration of an exemplary communication network 100. A first transceiver, mobile station 101, is connected to radio station (or base station) 102. This connection may be designed as a UMTS ("Universal Mobile Telecommunications System") connection, for example. Radio station 102 is connected to the main part of the network 103 directly or via multiple network nodes, for example (not shown). The main network 103 may also be called "backbone" of the network. In this example the backbone network 103 is, at least partially, designed as a packet based network, more specifically as an IP ("internet protocol") network.

Furthermore, a VoIP phone 105 (VoIP = Voice over IP) is connected via a digital subscriber line (DSL) to a so called access node 104 (AN) inside the network. Access node 104 may as well be connected to the main network 103 via multiple network nodes.

When a communication link is established between mobile station 101 (that may be a cellular phone, for example) and VoIP phone 105 the data sent in between the two transceivers is transmitted, at least partially, in data packets. As is explained above, due to different characteristics of the network 100 between mobile station 101 and VoIP phone 105, the data packets transmitted may be exposed to a certain delay. In this case a voice communication between users of mobile station 101 and VoIP phone 105 may be disrupted and feel uncomfortable.

To overcome this problem, especially the risk that both users talk at the same time, the round trip time of the data packets is determined. The round trip time, in this case, is the time a data packet would need to travel from mobile station 101 through the backbone of the network to VoIP phone 105 and back to mobile station 101 again.

To determine the round trip time any method can be used that is well known in the art. Most of the current methods to determine a round trip time are used to implement echo cancellation mechanisms, for example, but in general any method capable of calculating or measuring the transmission time for data packets in a communication network independent from the actual employment of the method can be used.

Visually spoken, the round trip time represents the time it takes for the answer to arrive at the questioner (shown as RTT in Fig. 1). Thus, after a user asked a question he can not expect to get an answer before the round trip time has expired.

The round trip time may be measured by an end user equipment like mobile station 101 or with the help of already existing means that can be allocated anywhere (especially in a centralized management unit, not shown) in the network 100. There may, in this case, be a feature implemented in the mobile station 101 that can request the measurement of the round trip time. The result is subsequently sent to mobile station 101 by the measurement means of network 100.

According to one embodiment of the invention it is also detected in another step when a user stops talking. This can be determined by means of existing mechanisms like silence detection or the like. In this case the voice signal is analyzed and for sections where no voice can be recognized for a certain time (i.e. sections with normal noise but no speech signals) it is found that the respective user has stopped talking.

It is to be noted that in other cases, too, it is determined whether the respective user or end station has stopped sending "useful" information, also referred to as user information or user data. That means it is determined when a user or end station has a pause in its transmission or when, at least, no relevant information / data is carried in the transmitted data packets. For example, in the case of a videophone, when a user stops talking data packets are still sent (the video of the user is continuously transmitted), but no useful or relevant information (i.e. the speech that is essential for the communication) is transmitted. This kind of data may also be called non-relevant information comprised data. On the other hand, data transmitting useful or relevant data may accordingly be called relevant information (comprised data) in the scope of this invention.

Regarding voice connections the same consideration applies. Even if a user has stopped talking (i.e. when there's no voice data to be transmitted or when there's no relevant data), there may still be data packets transmitted through the network 100. However, with current silence detection methods these pauses can be easily detected. Therefore, when it is recognized that one of the users on either mobile station 101 or VoIP phone 105 has stopped talking, this is indicated at the respective sender (mobile station 101 or VoIP phone 105) according to the invention. Thus, it is indicated that an answer can not arrive before the round trip time has passed. So, the user is reminded of the fact that a certain delay may occur in the communication und he will accommodate to this situation faster and more easily. All in all the communication will be more comfortable for the user. The communication may even be faster and, therefore, more cost effective.

The indication that no answer can be received can be given in different ways. For example, the indication may be an acoustic signal that, furthermore, may be mixed into the received audio signal at the speaker of the phone. Also, it is possible to indicate the delay time by means of an optical signal. The optical signal may be a light or a certain symbol on the phone or, in another case, a certain sign on a videophone, for example.

All other ways of indicating the delay time to the user such as tactile feedback on the phone or handheld are also possible and considered to be in the scope of the invention.

The inventive method can be implemented in the end user equipment (mobile phone or handheld) or in any other network node of the network. Especially the step of determining the delay time may be implemented in a central network node, for example. For TDM systems, the feature could be implemented in the first TDM switching system the user is connected to. In this case the delay time determined in the network can be transmitted to the end user's hardware.

Furthermore, the respective network node may also be designed such that the entire method is performed in said network node. In this case the feedback could be generated inside the node and directly sent to the end user equipment. As an example, a TDM switching system could generate an audio signal and send the signal via the normal audio (or telephone) channel to the end user equipment. With this implementation existing end user equipment could advantageously be reused, but would still be able to output the feedback signal to the user.

Furthermore, for packet based systems the inventive feedback mechanism (the indication) could be implemented directly inside the users' communication client hardware which may reside in the phone of the user, in a home gateway of the user or in an access gateway at the network provider's premises, for example.

## Claims

1. A method for transmitting data from a sender to a receiver in a communication system, wherein a delay time of the data is determined,
**characterized in**
**that** the delay time is indicated to the sender and/or the receiver.

2. A method according to claim 1,
**characterized in**
**that** it is determined whether the data to be transmitted is relevant and the delay time is indicated to the sender and/or the receiver depending on the determination of the relevance.

3. A method according to claim 2,
**characterized in**
**that** the delay time is indicated when no relevant data is transmitted.

4. A method according to claim 1, 2 or 3,
**characterized in**
**that** the delay time represents a round trip time for the data.

5. A method according to any of the preceding claims,
**characterized in**
**that** the data is at least partially voice data.

6. A method according to any of the preceding claims,
**characterized in**
**that** the indication is an acoustic and/or an optical and/or a tactile indication.

7. Communication system for transmitting data comprising at least one sender, at least one receiver and means for determining a delay time of the data,
**characterized in**
**that** the network system further comprises means for indicating the delay time to the sender and/or the receiver.

8. Communication system according to claim 7,
**characterized in**
**that** the system further comprises means for determining whether the data to be sent is relevant and that the means for indicating the delay time are configured to indicate the delay time to the sender and/or the receiver depending on the determination.

9. Communication system according to claim 7, 8 or 9,
**characterized in**
**that** the means for determining the delay time are configured to determine a round trip time representing the delay time.

10. Communication system according to one of the claims 7 to 9,
**characterized in**
**that** the means for indicating the delay time are configured to indicate the delay time in an acoustic and/or an optical and/or a tactile manner.

11. Sender for transmitting data in a communication system comprising means for determining a delay time of the data and means for indicating the delay time.

12. Sender according to claim 11,
**characterized in**
**that** the sender further comprises means for determining whether the data to be transmitted is relevant and that the means for indicating the delay time are configured to indicate the delay time depending on the determination of the relevance.

13. Sender according to claim 11 or 12,
**characterized in**
**that** the means for determining the delay time are configured to receive the delay time determined in the communication system.

14. Sender according to claim 11, 12 or 13,
**characterized in**
**that** the means for indicating the delay time are configured to indicate the delay time in an acoustic and/or an optical and/or a tactile way.

15. Computer program product stored on a computer readable medium that causes a computer to perform a method according to any of the method claims 1 to 6 when executed on the computer.
